# EUROPÄISCHE PATENTSCHRIFT

(11) **EP 2 070 845 B1**
(45) Veröffentlichungstag und Bekanntmachung des Hinweises auf die Patenterteilung: **01.12.2010**
(21) Anmeldenummer: 08167252.9
(22) Anmeldetag: 22.10.2008
(51) Int. Cl.: B65G 47/08, B65G 47/88

(54) **Verfahren und Vorrichtung zum Gruppieren von Kleiderbügeln**
Method and apparatus to group clothes hanger
Méthode et dipsositif pour regrouper les cintres

(30) Priorität: 10.12.2007 DE 102007059626
(43) Veröffentlichungstag der Anmeldung: 17.06.2009
(73) Patentinhaber: PEP Fördertechnik GmbH, 33609 Bielefeld (DE)
(72) Erfinder: Schneuing, Ralf, 33803, Steinhagen (DE)
(74) Vertreter: Dantz, Jan Henning

(56) Entgegenhaltungen:
- EP-A- 0 220 380
- EP-A- 1 544 136
- DE-A1- 10 026 093
- DE-U1- 29 804 038
- US-A- 6 050 421

## Beschreibung

Die vorliegende Erfindung betrifft ein Verfahren und eine Vorrichtung zum Gruppieren von Kleiderbügeln nach dem Oberbegriff der Ansprüche 1 und 3.

Bei der Lagerung und Auslieferung von Textilien, insbesondere von Kleidungsstücken, ist es notwendig, Gruppen von Kleiderbügeln mit entsprechenden Kleidungsstücken zusammenzufassen, beispielsweise um eine bestimmte Kollektion an einen Händler auszuliefern. Um solche Gruppen von Kleiderbügeln zu bilden ist es bekannt, Trennbügel zwischen die Kleiderbügel vorzusehen, was gerade bei kleineren Gruppen von Kleiderbügeln die Förderkapazität nachteilig beeinflusst. Zudem kann es zu Fehlern bei der Gruppierung kommen, was nur mit viel Aufwand behoben werden kann.

Die EP 220 380 offenbart eine Vorrichtung zum Gruppieren von Kleiderbügeln, wobei die Kleiderbügel oder ein Adapterhaken an einem Stopperelement angehalten werden können. An dem Stopperelement ist ein Sensor vorgesehen, um zu ermitteln, ob ein Adapterelement an dem Stopperelement gehalten ist. Die Führungselemente der Kleiderbügel und des Adapterhakens sind dabei baugleich ausgebildet.

Es ist daher Aufgabe der vorliegenden Erfindung ein Verfahren und eine Vorrichtung zum Gruppieren von Kleiderbügeln zu schaffen, die Fehler sicher vermeidet und eine hohe Förderkapazität besitzt.

Diese Aufgabe wird mit einem Verfahren mit den Merkmalen des Anspruches 1 und einer Vorrichtung mit den Merkmalen des Anspruches 3 gelöst.

Bei dem erfindungsgemäßen Verfahren wird ein Adapterhaken in einer Förderbewegung mittels eines Stopperelementes angehalten, wobei dann die Position des Adapterhakens über einen Sensor erfasst wird. Durch das Anhalten: des Adapterhakens werden nachfolgende Kleiderbügel an dem Adapterhaken aufgestaut und so gruppiert. Anschließend wird das Stopperelement geöffnet und wieder geschlossen, so dass der angehaltene Adapterhaken weiter in Förderrichtung bewegt wird und die aufgestauten Kleiderbügel zusammen mit dem Adapterhaken bewegt werden, wobei die Kleiderbügel auch in der geschlossenen Position des Stopperelementes an diesem vorbei gefördert werden, bis ein nachfolgender Adapterhaken durch das Stopperelement angehalten wird. Diese Vorgehensweise hat den Vorteil, dass durch das mechanische Anhalten eines Adapterhakens eine fehlerhafte Gruppierung vermieden wird. Denn der Adapterhaken übernimmt die Funktion eines Führungselementes, das die nachfolgenden Kleiderbügel gruppiert, bis ein weiterer Adapterhaken folgt. Dabei kann das Anhalten eines Adapterhakens solange erfolgen, bis eine nachfolgende Weiche oder andere Verarbeitungseinrichtung entsprechend angesteuert ist.

Dabei kann auch eine große Förderkapazität erhalten werden, da der Adapterhaken selbst mit ein oder mehreren Kleiderbügeln belegt werden kann.

Gemäß einer bevorzugten Ausgestaltung der Erfindung weist das Stopperelement zwei getrennt voneinander bewegbare Anschläge auf und der in Förderrichtung hintere Anschlag wird nur geöffnet, wenn der vordere Anschlag geschlossen ist. Dadurch wird sicher vermieden, dass selbst bei aufeinander folgenden Adapterhaken diese durch die Vorrichtung voneinander getrennt werden. Denn wenn der vordere Adapterhaken durch den hinteren Anschlag in Förderrichtung freigegeben wird, sorgt der vordere Anschlag für ein Anhalten des folgenden Adapterhakens.

Die erfindungsgemäße Vorrichtung zum Gruppieren von Kleiderbügeln umfasst ein Stopperelement, mittels dem ein sich bewegender Adapterhaken angehalten werden kann, und ein Sensor zur Erfassung, ob ein Adapterhaken an dem Stopperelement gehalten ist. Das Stopperelement weist mindestens einen bewegbaren Anschlag auf, der in der geschlossenen Position einen Adapterhaken aufhält, aber hinter einem Adapterhaken sich ansammelnde Kleiderbügel passieren lässt. Dies wird dadurch erreicht, dass der Adapterhaken eine andere Form als die nachfolgenden Kleiderbügel aufweist und insofern ein mechanischer Anschlag den Adapterhaken zurückhält, aber die Kleiderbügel aufgrund einer schlankeren Geometrie passieren können. Dadurch kann mit einfachen Mitteln eine effektive Gruppierung der Kleiderbügel erfolgen, die durch die einzelnen Adapterhaken voneinander getrennt werden.

Gemäß der Erfindung werden die Adapterhaken und Kleiderbügel entlang einer Schiene gefördert. Die Schiene kann beispielsweise schräg angeordnet sein, so dass eine Bewegung der Adapterhaken und Kleiderbügel durch die Schwerkraft erfolgt und keine gesonderten Antriebsmittel vorgesehen sein müssen.

Der Adapterhaken umfasst eine Aufnahme zum Einhängen mundestens eines Kleiderbügels. Dadurch kann der Adapterhaken auch selbst zum Fördern von Kleiderbügeln verwendet werden, was die Förderkapazität optimiert.

Um Fehler bei der Gruppierung der Kleiderbügel sicher zu vermeiden, kann das Stopperelement zwei getrennt voneinander bewegbare Anschläge aufweisen. Vorzugsweise ist dabei zwischen den Anschlägen der Sensor zur Erfassung der Belegung durch einen Adapterhaken vorgesehen, wobei der Platz zwischen den Anschlägen so ausgebildet ist, dass nur ein Adapterhaken eingefügt werden kann. Dann kann durch eine Steuerung sichergestellt sein, dass zumindest ein Anschlag immer in der geschlossenen Position verbleibt und direkt aufeinander folgende Adapterhaken durch die Vorrichtung ebenfalls voneinander getrennt werden.

Der Adapterhaken weist vorzugsweise benachbe=art zu einem Haken einen Wandabschnitt auf, der mit dem mindestens einen Anschlag des Stopperelementes zusammenwirkt. Der Wandabschnitt kann dabei seitlich hervorstehen und breiter ausgebildet sein als der Hals eines Kleiderbügels, um auf sichere Weise eine Trennung zwischen Adapterhaken und Kleiderbügel vornehmen zu können.

Gemäß einer weiteren Ausgestaltung umfasst der Adapterhaken mindestens eine Identifkationskennzeichnung, beispielsweise einen Barcorde oder einen RFID-Chip. Dadurch können Informationen zu den Kleidungsstücken an dem Adapterhaken und/oder der nachfolgenden Kleiderbügel gespeichert werden. Auch weitere Informationen wie Anzahl der Kleiderbügel etc. könnten abgespeichert werden, was über eine Steuerung für die Verarbeitung einer Gruppe von Kleiderbügeln zweckmäßig sein kann.

Die Erfindung wird nachfolgend anhand eines Ausführungsbeispieles mit Bezug auf die beigefügten Zeichnungen näher erläutert. Es zeigen:

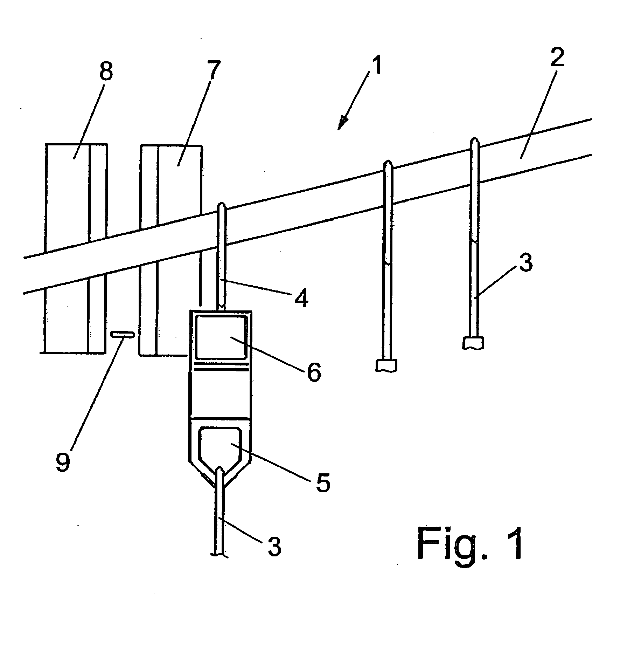

- Figur 1: eine Ansicht einer erfindungsgemäßen Vorrichtung zum Gruppieren von Kleiderbügeln;
- Figuren 2 A bis 2D: mehrere schematische Ansichten der Vorrichtung zum Gruppieren von Kleiderbügeln in unterschiedlichen Förderpositionen, und
- Figuren 3A bis 3C: mehrere Ansichten eines Adapterhakens für die Vorrichtung der Figur 1

Eine Vorrichtung 1 zum Gruppieren von Kleiderbügeln umfasst eine Schiene 2, die zur Horizontalen geneigt angeordnet ist und an der Kleiderbügel 3 eingehängt und gefördert werden. Die Schiene 2 besitzt eine solche Neigung, dass die Kleiderbügel 3 aufgrund der Schwerkraft an der Schiene 2 entlang rutschen können. Zwischen den Kleiderbügeln 3 ist jeweils ein Adapterhaken 4 vorgesehen, der zum Gruppieren der Kleiderbügel 3 eingesetzt wird. Der Adapterhaken 4 umfasst eine Markierung 6 zur Identifikation, beispielsweise einen Barcode. Ferner kann der Adapterhaken 4 alternativ oder zusätzlich auch einen RFID-Chip oder andere Kennzeichnungsmittel besitzen. Der Adapterhaken 4 umfasst ferner eine Aufnahme 5, an der ein oder mehrere Kleiderbügel 3 eingehängt werden können.

Um die Kleiderbügel 3 zu gruppieren ist ein Stopperelement vorgesehen, das zwei beabstandete Anschläge 7 und 8 aufweist, zwischen denen ein Sensor zur Erfassung der Belegung des Stopperelementes durch einen Adapterhaken 4 erfassbar ist.

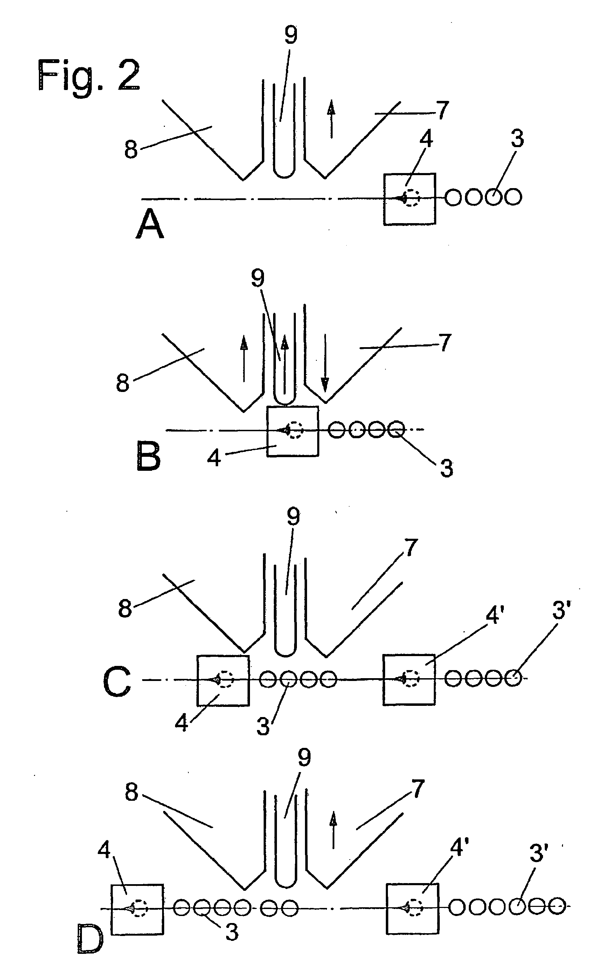

Das erfindungsgemäße Verfahren zum Gruppieren von Kleiderbügeln 3 wird mit Bezug auf die Figuren 2A bis 2D näher erläutert.

Ein Adapterhaken 4 bewegt sich in Förderrichtung entlang der Schiene und ist gefolgt von mehreren Kleiderbügeln 3 (Figur 2A). Der Adapterhaken 4 steht in eine Richtung senkrecht zur Förderrichtung seitlich über die meist aus einem Drahtabschnitt gebildeten Haken der Kleiderbügel hervor und kann dadurch durch die Anschläge 7 und 8 des Stopperelementes angehalten werden, während die Kleiderbügel 3 auch bei geschlossenen Anschlägen 7 und 8 an dem Stopperlelement passieren können.

In einem ersten Schritt wird der Adapterhaken 4 an dem vorderen ersten Anschlag 7 angehalten und geprüft, ob die Position zwischen den beiden Anschlägen 7 und 8 im Bereich des Sensors 9 frei ist. Ist diese Position frei, wird der Anschlag 7 von der Schiene wegbewegt, so dass der Adapterhaken 4 passieren kann und bis zu dem Anschlag 8 bewegt wird.

Wie in Figur 2B zu sehen ist, befinde sich der Sensor 9 zwischen den beiden Anschlägen 7 und 8 und kann die Belegung durch den Adapterhaken 4 erfassen, was dazu führt, dass die Steuerung den vorderen Anschlag 7 in die geschlossene Position bewegt und den Anschlag 8 gegebenenfalls mit einer gewissen Zeitverzögerung öffnet. Durch das Anhalten des Adapterhakens 4 werden die nachfolgenden Kleiderbügel 3 angestaut und befinden sich nun dicht hinter dem Adapterhaken 4.

Wenn der zweite Anschlag 8 geöffnet wird, kann der Adapterhaken 4 passieren, wie dies in Figur 2C zu sehen ist. Die hinter dem Adapterhaken 4 angeordneten Kleiderbügel 3 weisen einen schmalen Halsabschnitt auf, der so dünn ist, dass die Anschläge 7 und 8 selbst in der geschlossenen Position eine Bewegung der Kleiderbügel 3 nicht verhindern. Vielmehr können die Kleiderbügel 3 zusammen mit dem Adapterhaken 4 weiter gefördert werden und je nach Bedarf zu einer Verpackungsstation oder anderen Verarbeitungsstation bewegt werden. Sollte ein nachfolgender Adapterhaken 4' dem ersten Adapterhaken 4 mit den Kleiderbügeln 3 folgen, wird dieser nun durch den ersten Anschlag 7 aufgehalten, der solange in der geschlossenen Position bleibt, wie der Sensor 9 eine Belegung durch einen Adapterhaken 4 feststellt und der Anschlag 8 noch in der geöffneten Position ist. Erst wenn eine Belegung durch einen Adapterhaken 4 im Bereich des Sensors 9 nicht mehr vorliegt und der Anschlag 8 in der geschlossenen Position ist, kann der erste Anschlag 7 geöffnet werden (Figur 2D). Dadurch wird vermieden, dass ein folgender Adapterhaken 4' versehentlich zu der ersten Gruppe von Kleiderbügeln 3 mit dem Adapterhaken 4 bewegt wird. Der Adapterhaken 4' mit den nachfolgenden Kleiderbügeln 3' wird wieder zwischen den Anschlägen 7 und 8 angehalten, um dann mit den folgenden Kleiderbügeln 3' gruppiert und weiterverarbeitet zu werden.

In dem dargestellten Ausführungsbeispiel sind zwei getrennt voneinander bewegbare Anschläge 7 und 8 vorgesehen, zwischen denen ein Sensor 9 angeordnet ist. Diese Ausgestaltung hat den Vorteil, dass eine fehlerhafte Gruppierung sicher vermieden wird. Es ist natürlich auch möglich, durch eine entsprechende Steuerung auch nur einen Anschlag zur Gruppierung von Kleiderbügeln einzusetzen.

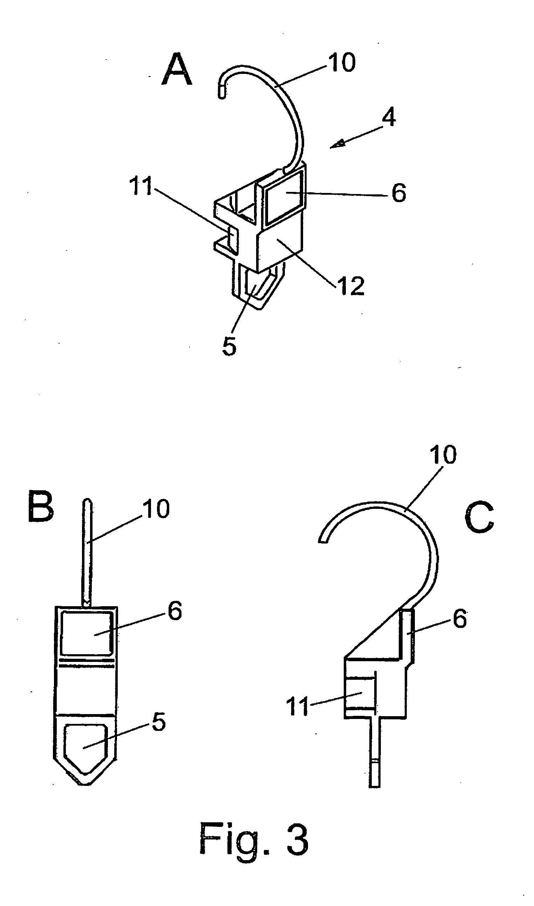

In den Figuren 3A bis 3C ist der Adapterhaken 4 im Detail dargestellt. Der Adapterhaken 4 umfasst einen oberen Haken 10, der an einer Schiene 2 eingehängt werden kann. Statt einem dünnen Halsabschnitt umfasst der Adapterhaken 4 jedoch einen Körper 12 aus Kunststoff, an dem eine Codierung 6, beispielsweise ein Barcode zur Identifizierung angeordnet ist. Ferner kann in dem Körper 12 aus Kunststoff ein RFID-Chip vorgesehen sein. An dem Körper 12 aus Kunststoff ist ein Anschlag 11 ausgebildet, der mit den Anschlägen 7 und 8 des Stopperelementes zusammenwirkt. Der Wandabschnitt 11 steht dabei seitlich von einem Halsabschnitt des Adapterhakens 10 hervor und besitzt eine größere Breite als die Drahtbügel nachfolgender Kleiderbügel.

Der Adapterhaken 4 umfasst ferner eine Aufnahme 5 in Form einer Öse, in die ein oder mehrere Kleiderhaken eingehängt werden können. Dadurch kann die Förderkapazität der Vorrichtung zum Gruppieren von Kleiderbügeln optimiert werden.

## Patentansprüche

1. Verfahren zum Gruppieren von Kleiderbügeln (3) mit den folgenden Schritten:
- Anhalten eines Adapterhakens (4) in einer Förderbewegung mittels eines Stopperelementes (7, 8);
- Erfassen einer Position des Adapterhakens (4);
- Aufstauen nachfolgender Kleiderbügel (3) an dem Adapterhaken (4);
- Öffnen und Schließen des Stopperelementes (7, 8) derart, dass der Adapterhaken (4) weiter in Förderrichtung bewegt wird, und
- Fördern der aufgestauten Kleiderbügel (3) an dem geschlossenen Stopperelement (7, 8) vorbei, bis ein nachfolgender Adapterhaken (4) durch das Stopperelement (7, 8) angehalten wird.

2. Verfahren nach Anspruch 1, **dadurch gekennzeichnet, dass** das Stopperelement zwei getrennt voneinander bewegbare Anschläge (7, 8) aufweist und der in Förderrichtung hintere Anschlag (8) nur geöffnet wird, wenn der vordere Anschlag (7) geschlossen ist.

3. Vorrichtung zum Gruppieren von Kleiderbügeln, mit mehreren Adapterhaken (4), die eine Aufnahme (5) zum Einhängen mindestens eines Kleiderbügels (3) aufweisen, einer Schiene (2), entlang welcher die Adapterhaken (4) und die Kleiderbügel (5) gefördert werden, und einem Stopperelement (7, 8), welches mindestens einen bewegbaren Anschlag aufweist, mittels dem ein sich bewegender Adapterhaken (4) angehalten werden kann, und einem Sensor (9) zur Erfassung ob ein Adapterhaken (4) an dem Stopperelement (7, 8) gehalten ist, **dadurch gekennzeichnet, daß** der bewegbare Anschlag in der in der geschlossenen Position einen Adapterhaken (4) anhält, aber hinter einem Adapterhaken (4) sich ansammelnde Kleiderbügel (3) passieren lässt.

4. Vorrichtung nach Anspruch 3, **dadurch gekennzeichnet, dass** das Stopperelement zwei getrennt voneinander bewegbare Anschläge (7, 8) aufweist.

5. Vorrichtung nach Anspruch 4, **dadurch gekennzeichnet, dass** zwischen den Anschlägen (7, 8) der Sensor (9) zur Erfassung der Belegung durch einen Adapterhaken (4) vorgesehen ist.

6. Vorrichtung nach einem der Ansprüche 3 bis 5, **dadurch gekennzeichnet, dass** der Adapterhaken (4) benachbart zu einem Haken (10) einen Wandabschnitt (11) aufweist, der mit dem mindestens einen Anschlag des Stopperelementes (7, 8) zusammenwirkt.

7. Vorrichtung nach einem der Ansprüche 3 bis 6, **dadurch gekennzeichnet, dass** der Adapterhaken (4) eine Identifikationskennzeichnung aufweist.

## Claims

1. Method for the grouping of clothes hangers (3), comprising the following steps:
- stoppage of an adapter hook (4) in a transport motion by means of a stopper element (7, 8);
- detection of a position of the adapter hook (4);
- piling-up of following clothes hangers (3) on the adapter hook (4);
- opening and closing of the stopper element (7, 8) in such a way that the adapter hook (4) is moved onward in the transport direction, and
- transport of the stowed-up clothes hangers (3) past the closed stopper element (7, 8) until a following adapter hook (4) is stopped by the stopper element (7, 8).

2. Method according to Claim 1, **characterized in that** the stopper element has two stops (7, 8), which can be moved separately from each other, and the rear stop (8) in the transport direction is only opened when the front stop (7) is closed.

3. Device for the grouping of clothes hangers, comprising a plurality of adapter hooks (4) which have a receiving fixture (5) for the hanging of at least one clothes hanger (3), a rail (2), along which the adapter hooks (4) and the clothes hangers (3) are transported, and a stopper element (7, 8) which has at least one movable stop, by means of which a moving adapter hook (4) can be stopped, and a sensor (9) for detecting whether an adapter hook (4) is held at the stopper element (7, 8), **characterized in that** the movable stop, in the closed position, stops an adapter hook (4), but grants passage to clothes hangers (3) gathering behind an adapter hook (4).

4. Device according to Claim 3, **characterized in that** the stopper element has two stops (7, 8), which can be moved separately from each other.

5. Device according to Claim 4, **characterized in that** the sensor (9) for detecting the occupancy by an adapter hook (4) is provided between the stops (7, 8).

6. Device according to one of Claims 3 to 5, **characterized in that** the adapter hook (4) has adjacent to a hook (10) a wall portion (11) which coooperates with the at least one stop of the stopper element (7, 8).

7. Device according to one of Claims 3 to 6, **characterized in that** the adapter hook (4) has an identification marking.

## Revendications

1. Procédé de groupage de cintres pour vêtements (3), comprenant les étapes suivantes :
- arrêt d'un crochet adaptateur (4) dans une direction de transport au moyen d'un élément stoppeur (7, 8) ;
- saisie d'une position du crochet adaptateur (4) ;
- accumulation de cintres successifs (3) contre le crochet adaptateur (4) ;
- ouverture et fermeture de l'élément stoppeur (7, 8), de manière que le crochet adaptateur (4) continue à se déplacer en direction de transport, et
- dépassement de l'élément stoppeur fermé (7, 8) par les cintres accumulés (3), jusqu'à ce qu'un crochet adaptateur suivant (4) soit arrêté par l'élément stoppeur (7, 8).

2. Procédé selon la revendication 1, **caractérisé en ce que** l'élément stoppeur comporte deux butées (7, 8) déplaçables séparément l'une de l'autre, et **en ce que** la butée (8), arrière en direction de transport, n'est ouverte que lorsque la butée avant (7) est fermée.

3. Dispositif pour le groupage de cintres, avec plusieurs crochets adaptateurs (4) comportant une réception (5) pour l'accrochage d'au moins un cintre (3), un rail (2) le long duquel sont transportés les crochets adaptateurs (4) et les cintres (3), et un élément stoppeur (7, 8) comportant au moins une butée mobile au moyen de laquelle un crochet adaptateur (4) peut être arrêté en déplacement, et un capteur (9) permettant de déterminer si un crochet adaptateur (4) est maintenu contre l'élément stoppeur (7, 8), **caractérisé en ce que** la butée mobile arrête un crochet adaptateur (4) en position fermée, en laissant toutefois passer les cintres (3) qui s'accumulent derrière un crochet adaptateur (4).

4. Dispositif selon la revendication 3, **caractérisé en ce que** l'élément stoppeur comporte deux butées (7, 8) déplaçables séparément l'une de l'autre.

5. Dispositif selon la revendication 4, **caractérisé en ce que** le capteur (9) de saisie d'occupation est prévu par un crochet adaptateur (4) entre les butées (7, 8).

6. Dispositif selon l'une des revendications 3 à 5, **caractérisé en ce que** le crochet adaptateur (4) comporte une partie de paroi (11) contiguë à un crochet, laquelle coopère avec au moins une butée de l'élément stoppeur (7, 8).

7. Dispositif selon l'une des revendications 3 à 6, **caractérisé en ce que** le crochet adaptateur (4) est pourvu d'un marquage d'identification.
